# EUROPEAN PATENT APPLICATION

(11) **EP 2 515 145 A1**
(43) Date of publication of application: **24.10.2012**
(21) Application number: 12164879.4
(22) Date of filing: 20.04.2012
(51) Int. Cl.: G01T 1/02, G01T 7/00

(54) **Methods and Systems for Use in Monitoring Radiation**

(30) Priority: 21.04.2011 US 201113091739
(71) Applicant: General Electric Company, Schenectady, NY 12345 (US)
(72) Inventor: Hatch, Charles Terrance, Minden, NV 89423 (US); Campbell, Lam Arthur, Minden, NV 89423 (US); Sheikman, Boris Leonid, Minden, NV 89423 (US); O'Connor, David Robert, Gardnerville, NV 89410 (US); Whitefield II, Charles David, Minden, NV 89423 (US)
(74) Representative: Picker, Madeline Margaret

(57) **Abstract**

A display assembly (118) for use with a monitoring system (100) is provided. The display assembly includes a communication interface (202) that is configured to receive radiation data indicative of at least a dosage level for the radiation. Moreover, the display assembly also includes a processor (210) that is coupled to the communication interface, wherein the processor is programmed to generate at least one image representative of the radiation data. The display assembly also includes a display media (218) coupled to the processor, wherein the display media is configured to present the image to a user in real-time. The display assembly is positioned against the user such that the display assembly is movable with the user and the user is enabled to continuously monitor the radiation within a location (108) while the user moves about the location.

## Description

### BACKGROUND OF THE INVENTION

The field of the invention relates generally to monitoring systems and, more particularly, to monitoring systems for use in monitoring radiation.

In many industrial facilities, such as nuclear generating stations (NGSs) and power plants, the potential for radiation to be emitted into the environment and surrounding areas exists. More specifically, during operation and under certain circumstances, nuclear power plants may emit dangerous levels of radiation. For example, at least some known piping systems within an NGS may channel fluid that is contaminated with radioactive materials. Accordingly, monitoring radiation within such systems is essential.

To detect the presence of radiation within such industrial facilities, at least some known monitoring systems and devices, such as dosimeters, may be used. At least some of such monitoring systems use at least one sensor to detect the presence of radiation. The sensor transmits data received associated with the radiation to a display device that enables a user to monitor the radiation within the facility. However, such monitoring systems may not necessarily provide real-time data, as the user may be required to go to a different location to view the display device. Moreover, a device, such as the dosimeter, may be difficult to use by the user. For example, the user may be required to carry the dosimeter, which can be heavy. Moreover, the user is required to periodically look at the dosimeter to see the reading. Such devices may also have audible alarms that provide a sound, such as a clicking and/or accelerated clicking sound when the presence of radiation exceeds a predefined threshold value. However, such devices are unable to annunciate an actual radiation dosage level and/or dose rate. Moreover, such devices do not enable a user to monitor radiation within a facility in a hands free mode nor do such devices and/or monitoring systems enable a user to have a direct display of a radiation level that is lightweight, portable, and convenient to carry around a location.

### BRIEF DESCRIPTION OF THE INVENTION

In one embodiment, a display assembly for use with a monitoring system is provided. The display assembly includes a communication interface that is configured to receive radiation data indicative of at least a dosage level for the radiation. Moreover, the display assembly also includes a processor that is coupled to the communication interface, wherein the processor is programmed to generate at least one image representative of the radiation data. The display assembly also includes a display media coupled to the processor, wherein the display media is configured to present the image to a user in real-time. The display assembly is positioned against the user such that the display assembly is movable with the user and the user is enabled to continuously monitor the radiation within a location while the user moves about the location.

In another embodiment, a monitoring system is provided. The monitoring system includes a sensor assembly including at least one sensor that is configured to detect radiation and to generate at least one signal representative of radiation data based on the detection of the radiation. The radiation data is indicative of at a dosage level for the radiation. Moreover, the monitoring system includes a display assembly that is communicatively coupled to the sensor assembly. The display assembly includes a communication interface that is configured to receive the radiation data. Moreover, the display assembly also includes a processor that is coupled to the communication interface, wherein the processor is programmed to generate at least one image based representative of the radiation data. The display assembly also includes a display media coupled to the processor, wherein the display media is configured to present the image to a user in real-time. The display assembly is positioned against the user such that the display assembly is movable with the user and the user is enabled to continuously monitor the radiation within a location while the user moves about the location.

In yet another embodiment, a method for use in monitoring radiation is provided. The method includes positioning a display assembly against a user such that the display assembly is movable with the user and the user is enabled to continuously monitor the radiation within a location while the user moves about the location. Radiation data that is indicative of at least a dosage level for the radiation is received. At least one image representative of the radiation data is then generated. The image is presented in real-time, via a display media, to the user.

### BRIEF DESCRIPTION OF THE DRAWINGS

Fig. 1 is a block diagram of an example monitoring system;
Fig. 2 is a schematic perspective view of an example display assembly that may be used with the monitoring system shown in Fig. 1;
Fig. 3 is a block diagram of an alternative embodiment of an example display assembly that may be used with the monitoring system shown in Fig. 1; and
Fig. 4 is a flow diagram of an example method for use in monitoring radiation using the display assembly shown in Fig. 2.

### DETAILED DESCRIPTION OF EMBODIMENTS OF THE INVENTION

The example methods and systems described herein overcome at least some known disadvantages associated with known systems for use in monitoring radiation within an industrial facility. In particular, the embodiments described herein provide a monitoring system that includes a display assembly. The display assembly includes a communication interface that is configured to receive radiation data indicative of at least a dosage level for the radiation. Moreover, the display assembly also includes a processor that is coupled to the communication interface, wherein the processor is programmed to generate at least one image representative of the radiation data. The display assembly also includes a display media coupled to the processor, wherein the display media is configured to present the image to a user in real-time. The display assembly is positioned against the user such that the display assembly is movable with the user and the user is enabled to continuously monitor the radiation within a location while the user moves about the location. As such, the monitoring system disclosed herein enables the user to monitor the radiation in a hands-free mode and/or enables the user to have a direct display via a handheld sensor that is lightweight and convenient to carry around the facility.

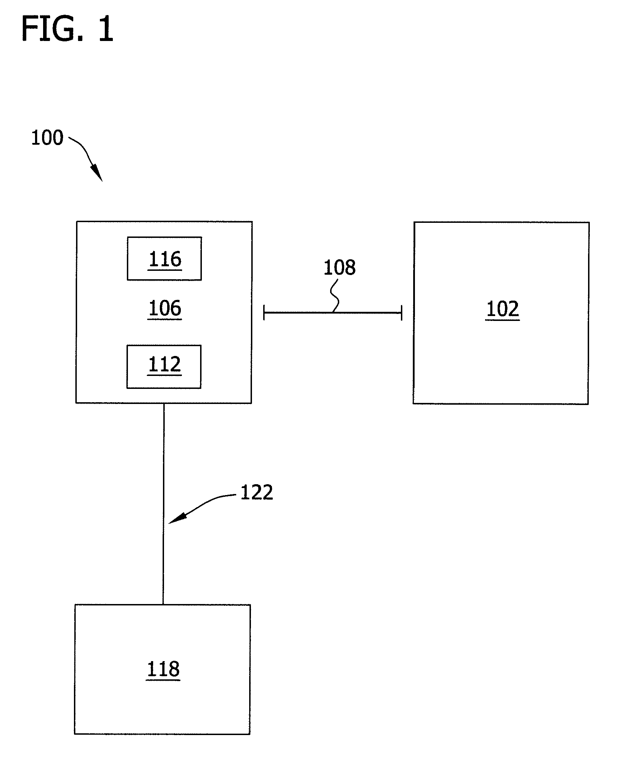

Fig. 1 illustrates an example monitoring system 100 that may be used to enable a user (not shown) to monitor radiation within a location (not shown) in an industrial facility (not shown), such as a nuclear generating stations (NGS) and/or power plant. More specifically, in the example embodiment, monitoring system 100 enables a user to monitor radiation. In the example embodiment, monitoring system 100 monitors ionizing electromagnetic radiation, such as, for example, neutrons, gamma rays, x-rays, and alpha and beta particles, being emitted from a piping system 102, within the NGS. While the example embodiment describes a monitoring system being used in an industrial facility, the present invention is not limited to an industrial facility, and one of ordinary skill in the art will appreciate that the current invention may be used in connection with any facility that may contain radiation.

In the example embodiment, monitoring system 100 includes a sensor assembly 106 that is spaced a distance 108 from piping system 102. Sensor assembly 106 includes at least one transducer or sensor 112. More specifically, in the example embodiment, sensor assembly 106 includes a plurality of sensors 112 that each detects the presence of radiation and/or at least one radioactive component (not shown) within distance 108. More specifically, in the example embodiment, each sensor 112 detects a particular type of radiation and detects a dosage level and/or dose rate for the radiation. Alternatively, sensors 112 may be configured to detect various other parameters of radiation or radioactivity that enable sensor assembly 106 and/or monitoring system 100 to function as described herein. In the example embodiment, the dosage level for the radiation is detected and presented in the units of Sievert (Sv), and the dose rate for the radiation is presented in milliSieverts per/hour (mSv/hr). Alternatively, any other unit known in the art may be used.

In the example embodiment, sensor assembly 106 also includes a sensor communication interface 116 that enables sensor assembly 106 to communicate with at least one other component of monitoring system 100. More specifically, monitoring system 100 includes a display assembly 118, and communication interface 116 is coupled to display assembly 118 via network 122. It should be noted that, as used herein, the term "couple" is not limited to a direct mechanical, communication, and/or an electrical connection between components, but may also include an indirect mechanical, communication and/or electrical connection between multiple components.

In the example embodiment, sensor assembly 106 communicates with display assembly 118 using a wireless communication means, such as radio frequency (RF), e.g., FM radio and/or digital audio broadcasting, an Institute of Electrical and Electronics Engineers (IEEE®) 802.11 standard (e.g., 802.11(g) or 802.11(n)), the Worldwide Interoperability for Microwave Access (WIMAX®) standard, a cellular phone technology (e.g., the Global Standard for Mobile communication (GSM)), a satellite communication link, and/or any other suitable communication means. WIMAX is a registered trademark of WiMax Forum, of Beaverton, Oregon. IEEE is a registered trademark of Institute of Electrical and Electronics Engineers, Inc., of New York, New York. Alternatively, sensor assembly 106 may communicate with display assembly 118 using a wired network connection (e.g., Ethernet or an optical fiber).

In the example embodiment, communication interface 116 enables sensor assembly 106 to communicate with display assembly 118. More specifically, in the example embodiment, communication interface 116 receives information from each sensor 112. In the example embodiment, communication interface 116 receives radiation data that is indicative of a dosage level for the radiation detected and/or a dose rate. Moreover, communication interface 116 transmits a signal representative of the radiation data to display assembly 118 based on information received from each sensor 112.

Moreover, in the example embodiment, display assembly 118 receives the radiation data and presents the radiation data to the user in the form of at least one image. In the example embodiment, display assembly 118 is positioned against the user, such as against the body of the user, such that display assembly 118 is movable with the user and the user is enabled to continuously monitor the radiation within a location, such as distance 108, while the user moves about the location. For example, display assembly 118 may be worn or held by the user.

Similarly, in the example embodiment, sensor assembly 106 is also positioned against the user, such as against the body of the user. For example, sensor assembly 106 may be worn or held by the user. Alternatively, sensor assembly 106 may not be positioned against the body of the user and may be located anywhere within the industrial facility.

During operation, in the example embodiment, as the user approaches piping system 102, if any radiation is emitted from piping system 102, such radiation will be detected when the user is within distance 108. Each sensor 112 detects the presence of radiation by detecting a particular type of radiation and detecting a dosage level for the radiation and/or a dose rate for the radiation detected. The radiation data is transmitted to communication interface 116. The radiation data is then transmitted to display assembly 118, wherein the radiation data is then continuously presented to the user via at least one image. More specifically, in the example embodiment, since display assembly 118 and sensor assembly 106 are positioned against the user, the radiation data received by display assembly 118 may change based on the location of the user.

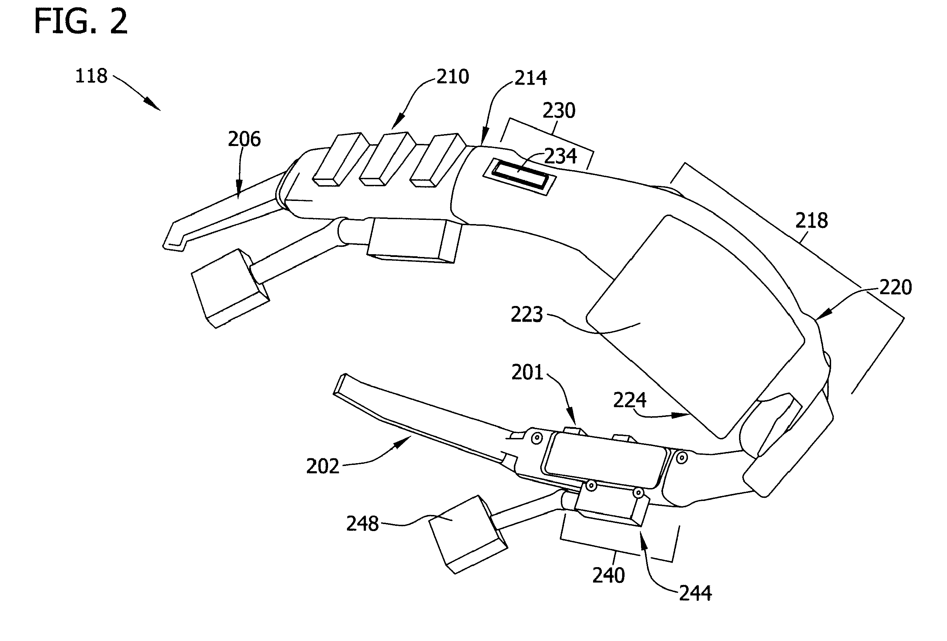

Fig. 2 is a schematic diagram of an example display assembly 118 that may be used with monitoring system 100 (shown in Fig. 1). In the example embodiment, display assembly 118 is worn by a user (not show) such that display assembly is positioned against the user, such as against the body (not shown) of the user. More specifically, display assembly 118 is incorporated into a pair of eyeglasses worn by the user such as safety glasses usually worn in industrial settings. Alternatively, display assembly 118 may be any form such that display assembly 118 may be positioned against the user and that enables display assembly 118 and/or monitoring system 100 to function as described herein.

Moreover, in the example embodiment, display assembly 118 includes a battery 201 that provides power to display assembly 118. In the example embodiment, battery 201 is a rechargeable lithium-ion battery 201. Alternatively, battery 201 may be any other lithium-based battery or any other type of battery that enables display assembly 118 to function as described herein.

Display assembly 118 includes a communication interface 202 that receives radiation data from sensor assembly 106 (shown in Fig. 1). More specifically, sensor communication interface 116 (shown in Fig. 1) is coupled to communication interface 202 via network 122 (shown in Fig. 1). In the example embodiment, communication interface 116 transmits a signal representative of the radiation data received from each sensor 112 (shown in Fig. 1) to communication interface 202. Moreover, in the example embodiment, communication interface 202 is an antenna, such as, for example, an antenna that may be used for wireless radio communication. Alternatively, communication interface 202 may be any other type of communication module that enables display assembly 118 and/or monitoring system 100 to function as described herein.

In the example embodiment, display assembly 118 also includes a receiver 206 communicatively coupled to communication interface 202. More specifically, in the example embodiment, receiver 206 is a wireless receiver that receives the radiation data from communication interface 202 via a wireless data connection. Moreover, receiver 206 transmits the radiation data to a processor 210 that is coupled to communication interface 202 and receiver 206 via a system bus (not shown). Processor 210 is also coupled to a memory device 214 via the system bus.

In some embodiments, executable instructions are stored in memory device 214. Moreover, display assembly 118 is programmable to perform one or more operations described herein by programming processor 210. For example, processor 210 may be programmed by encoding an operation as one or more executable instructions and providing the executable instructions in memory device 214. Processor 210 may include one or more processing units (e.g., in a multi-core configuration). In the example embodiment, processor 210 is programmed to continuously generate at least one image based on the radiation data processor continues to receive from sensor assembly 106. More specifically, in the example embodiment, processor 210 is programmed to generate an image that includes a graphical representation of the dosage level and/or a dose rate for the radiation detected. Moreover, in the example embodiment, processor 210 is programmed to generate an image that includes the remaining time until a predefined threshold value for the dosage level and/or the dose rate is reached. Processor 210 is also programmed to generate an image that includes a textual warning if the dosage level and/or dose rate exceeds a predefined threshold. More specifically, in the example embodiment, the textual warning is provided prior to the dosage level and or dose rate for the radiation exceeding the predefined threshold value. Moreover, processor 210 is programmed to provide the textual warning in time intervals (i.e., every ten minutes) such that the textual warning flashes in the sequence of the time intervals when presented to a user. Alternatively, processor 210 may be programmed to generate any other image(s) that enable display assembly 118 and/or monitoring system 100 to function as described herein. Moreover, in the example embodiment, processor 210 is programmed to generate an audio output based on the dosage level and/or dose rate for the radiation exceeding the predefined threshold value.

As used herein, the term "processor" refers generally to any programmable system including systems and microcontrollers, reduced instruction set circuits (RISC), application specific integrated circuits (ASIC), programmable logic circuits (PLC), and any other circuit or processor capable of executing the functions described herein. The above represent examples only, and thus are not intended to limit in any way the definition and/or meaning of the term "processor."

Moreover, processor 210 may include, but is not limited to, a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by processor 210, cause processor 210 to perform at least a portion of the methods described herein. The above examples are example only, and thus are not intended to limit in any way the definition and/or meaning of the term processor.

Memory device 214 enables information such as executable instructions and/or other data to be stored and retrieved. Memory device 214 may include one or more computer readable media, such as, without limitation, dynamic random access memory (DRAM), static random access memory (SRAM), a solid state disk, and/or a hard disk. Memory device 214 may be configured to store, without limitation, executable instructions, configuration data, geographic data (e.g., topography data and/or obstructions), utility network equipment data, and/or any other type of data.

In the example embodiment, memory device 214 stores the radiation data received from sensor assembly 106 and stores the images that are generated by processor 210. Moreover, in the example embodiment, memory device 214 may include random access memory (RAM), which can include non-volatile RAM (NVRAM), magnetic RAM (MRAM), ferroelectric RAM (FeRAM) and other forms of memory. Memory device 214 may also include read only memory (ROM), flash memory and/or Electrically Erasable Programmable Read Only Memory (EEPROM). Any other suitable magnetic, optical and/or semiconductor memory, by itself or in combination with other forms of memory, may be included in memory device 214. Memory device 214 may also be, or include, a detachable or removable memory, including, but not limited to, a suitable cartridge, disk, CD ROM, DVD or USB memory. Alternatively, memory device 214 may be a database. The term "database" refers generally to any collection of data including hierarchical databases, relational databases, flat file databases, object-relational databases, object oriented databases, and any other structured collection of records or data that is stored in a computer system. The above represent examples only, and thus are not intended to limit in any way the definition and/or meaning of the term database. Examples of databases include, but are not limited to only including, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

A display media 218 and a display adaptor 220 are also coupled to processor 210 via the system bus. In the example embodiment, display media 218 includes at least one screen 223 within at least one lens 224. More specifically, in the example embodiment, display media 218 includes two lenses 224, wherein each lens 224 has one screen 223 within. In the example embodiment, lenses 224 are polarizing lenses. Alternatively, lenses 224 may be any type of lens that enables display media 218 to function as described herein. Moreover, in the example embodiment, display media 218 presents the images generated by processor 210 to the user. More specifically, in the example embodiment, display media 218 includes a visual display, such as a cathode ray tube (CRT), a liquid crystal display (LCD), an organic LED (OLED) display, and/or an "electronic ink" display. As such, in the example embodiment, the user is enabled to see the images on at least one of the screens 223 within lenses 224.

In the example embodiment, display assembly 118 also includes a user interface 230 that is coupled to processor 210 via the system bus. User interface 230 receives any information suitable for use with the methods described herein. More specifically, in the example embodiment, the user can input the various images the user would like displayed on display media 218 and the user can input whether the user would like to receive information via an audio signal. Moreover, the user can input the time intervals in which the user would like to receive the textual warning. Further, in the example embodiment, user interface 230 includes a touch sensitive panel 234. Alternatively, user may include, for example, a keyboard, a pointing device, a mouse, a stylus, a touch pad, a touch screen, a gyroscope, an accelerometer, a position detector. Display assembly 118 also includes an audio input interface 240 coupled to processor via the system bus. In the example embodiment, audio input interface 240 includes a microphone 244 to enable the user to communicate with a third party.

Moreover, in the example embodiment, display assembly 118 includes an audio output device 248 that is coupled to processor 210 via the system bus. In the example embodiment, audio output device 248 is an audio adapter and/or a speaker.

Alternatively, audio output device 248 may be any type of device that enables display assembly 118 and/or monitoring system 100 to function as described herein. In the example embodiment, audio output device 248 is configured to receive an output from processor 210 when the dosage level and/or dose rate for the radiation exceeds the predefined threshold value and to generate an audio signal based on the output received. More specifically, audio output device 248 is configured to generate an audio signal based on the dosage level and/or dose rate for the radiation exceeding a predefined threshold value. Audio output device 248 is configured to transmit the audio signal to the user. In the example embodiment, the audio signal is an audio alarm that may annunciate an actual radiation dosage level, dose rate, and/or warning. Alternatively, audio signal may be any type of audio signal that enables display assembly 118 and/or monitoring system 100 to function as described herein.

During operation, in the example embodiment, as the user wearing display assembly 118 approaches piping system 102 (shown in Fig. 1), if radiation is emitted from piping system 102, then the radiation will be detected within distance 108 (shown in Fig. 1). Each sensor 112 (shown in Fig. 1) detects the presence of the radiation by detecting the particular type of radiation and by detecting a dosage level for the radiation. This radiation data is transmitted to communication interface 116.

Moreover, in the example embodiment, the radiation data is transmitted to display assembly 118. More specifically, the radiation data is received by communication interface 202. Communication interface 202 transmits the radiation data to receiver 206, which transmits the data to processor 210 and to memory device 214 such that the radiation data may be stored. Processor 210 continuously generates a plurality of images based on the radiation data that communication interface 202 continues to receive. More specifically, processor 210 generates an image that includes a graphical representation of a dosage level and/or dose rate for the radiation detected and the time remaining until a predefined threshold value for the dosage level and/or dose rate is reached. If the dosage level and/or dose rate exceeds the predefined threshold value that is programmed in processor 210, then processor 210 generates an image that includes a textual warning.

Display media 218 continuously presents information to the user based on the input the user provides to user interface 230. More specifically, the user can input whether the information is presented via a visual output and/or audio output. If the user chooses to receive the information via a visual output, processor 210 continuously transmits the plurality of images to display media 218. The user can then visually identify various parameters of the radiation within the industrial facility. More specifically, the user will be presented with an image that includes a graphical representation of a dosage level and/or dose rate for the radiation detected and the time remaining until a predefined threshold value for the dosage level and/or dose rate is reached. Moreover, if the dosage level and/or dose rate exceeds a predefined threshold value, then the user will see an image that includes a textual warning. These images will continue to change as each of the parameters change while the user moves about a location within the industrial facility.

If the user chooses to receive additional information via an audio output, processor 210 transmits an audio output to audio output device 248 when the dosage level and/or dose rate for the radiation exceeds a predefined threshold level. Audio output device 248 generates an audio signal based on the output received. More specifically, audio output device 248 generates an audio signal based on the dosage level and/or dose rate for the radiation exceeding the predefined threshold value. Audio output device 248 then transmits the audio signal to the user.

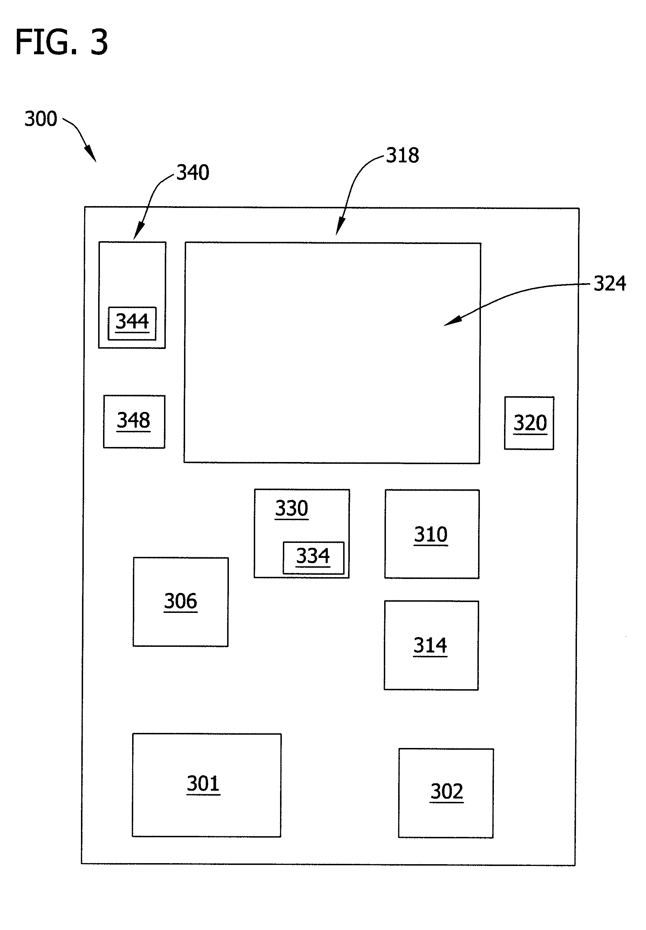

Fig. 3 illustrates an alternative display assembly 300 that may be used with monitoring system 100 (shown in Fig. 1) rather than display assembly 118 (shown in Figs. 1 and 2). In the example embodiment, display assembly 300 is held or retained by a user such that display assembly 300 is positioned against the user, such as against the body of the user. More specifically, display assembly 300 is in the embodiment of a handheld computing device, such as a smart phone. Alternatively, display assembly 300 may be any form such that display assembly 300 may be positioned against the user and that enables display assembly 300 and/or monitoring system 100 to function as described herein.

Moreover, in the example embodiment, display assembly 300 includes a battery 301 to provide power to display assembly 300. In the example embodiment, battery 301 is a rechargeable lithium-ion battery 301. Alternatively, battery 301 may be any other lithium-based battery or any other type of battery that enables display assembly 300 and/or monitoring system to function as described herein.

Display assembly 300 includes a communication interface 302 that receives radiation data from sensor assembly 106 (shown in Fig. 1). More specifically, sensor communication interface 116 (shown in Fig. 1) is coupled to communication interface 302 via network 122 (shown in Fig. 1). In the example embodiment, communication interface 116 transmits a signal representative of the radiation data received from each sensor 112 (shown in Fig. 1) to communication interface 302. Moreover, in the example embodiment, communication interface 302 is a short-range wireless communication channel such as BLUETOOTH®. BLUETOOTH is a registered trademark of Bluetooth SIG, Inc. of Kirkland, Washington. Alternatively, communication interface 302 may be any other type of communication module that enables display assembly 300 and/or monitoring system 100 to function as described herein.

In the example embodiment, display assembly 300 also includes a receiver 306 communicatively coupled to communication interface 302. More specifically, in the example embodiment, receiver 306 is a wireless receiver that receives the radiation data from communication interface 302 via a wireless data connection (not shown). Moreover, receiver 306 transmits the radiation data to a processor 310 that is coupled to communication interface 302 and receiver 306 via a system bus (not shown). Processor 310 is also coupled to a memory device 314 via the system bus.

In some embodiments, executable instructions are stored in memory device 314. Moreover, display assembly 300 is programmable to perform one or more operations described herein by programming processor 310. For example, processor 310 may be programmed by encoding an operation as one or more executable instructions and providing the executable instructions in memory device 314. Processor 310 may include one or more processing units (e.g., in a multi-core configuration). In the example embodiment, processor 310 is programmed to continuously generate at least one image based on the radiation data processor continues to receive from sensor assembly 106. More specifically, in the example embodiment, processor 310 is programmed to generate an image that includes a graphical representation of the dosage level and/or dose rate for the radiation detected. Moreover, in the example embodiment, processor 310 is programmed to generate an image that includes the remaining time until a predefined threshold value for the dosage level and/or dose rate is reached. Processor 310 is also programmed to generate an image that includes a textual warning if the dosage level and/or dose rate exceeds a predefined threshold. More specifically, in the example embodiment, the textual warning is provided prior to the dosage level and/or dose rate for the radiation exceeding the predefined threshold level. Moreover, processor 310 is programmed to provide the textual warning in time intervals (i.e., every ten minutes) such that the textual warning flashes in the sequence of the time intervals when presented to a user. Alternatively, processor 310 may be programmed to generate any other image(s) that enable display assembly 300 and/or monitoring system 100 to function as described herein. Moreover, in the example embodiment, processor 310 is programmed to generate an audio output based on the dosage level for the radiation exceeding the predefined threshold value.

Moreover, processor 310 may include, but is not limited to, a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by processor 310, cause processor 310 to perform at least a portion of the methods described herein. The above represent examples, and thus are not intended to limit in any way the definition and/or meaning of the term processor.

Memory device 314 enables information such as executable instructions and/or other data to be stored and retrieved. Memory device 314 may include one or more computer readable media, such as, without limitation, dynamic random access memory (DRAM), static random access memory (SRAM), a solid state disk, and/or a hard disk. Memory device 314 may be configured to store, without limitation, executable instructions, configuration data, geographic data (e.g., topography data and/or obstructions), utility network equipment data, and/or any other type of data.

In the example embodiment, memory device 314 stores the radiation data received from sensor assembly 106 and stores the images that are generated by processor 310. Moreover, in the example embodiment, memory device 314 may include random access memory (RAM), which can include non-volatile RAM (NVRAM), magnetic RAM (MRAM), ferroelectric RAM (FeRAM) and other forms of memory. Memory device 314 may also include read only memory (ROM), flash memory and/or Electrically Erasable Programmable Read Only Memory (EEPROM). Any other suitable magnetic, optical and/or semiconductor memory, by itself or in combination with other forms of memory, may be included in memory device 314. Memory device 314 may also be, or include, a detachable or removable memory, including, but not limited to, a suitable cartridge, disk, CD ROM, DVD or USB memory. Alternatively, memory device 314 may be a database. The term "database" refers generally to any collection of data including hierarchical databases, relational databases, flat file databases, object-relational databases, object oriented databases, and any other structured collection of records or data that is stored in a computer system. The above represent examples only, and thus are not intended to limit in any way the definition and/or meaning of the term database. Examples of databases include, but are not limited to only including, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

A display media 318 and a display adaptor 320 are also coupled to processor 310 via the system bus. In the example embodiment, display media 318 includes a display screen 324. Moreover, in the example embodiment, display media 318 presents the images generated by processor 310 to the user. More specifically, in the example embodiment, display media 318 includes a visual display, such as a cathode ray tube (CRT), a liquid crystal display (LCD), an organic LED (OLED) display, and/or an "electronic ink" display. As such, in the example embodiment, the user is enabled to see the images on screen 324.

In the example embodiment, display assembly 300 also includes a user interface 330 that is coupled to processor 310 via the system bus. User interface 330 receives any information suitable for use with the methods described herein. More specifically, in the example embodiment, the user can input the various images the user would like displayed on display media 318 and the user can input whether the user would like an audio signal as well. Moreover, the user can input the time intervals in which the user would like to receive the textual warning. Moreover, in the example embodiment, user interface 330 includes a keyboard 334. Alternatively, user may include, for example, a pointing device, a mouse, a stylus, a touch pad, a touch screen, a gyroscope, an accelerometer, a position detector. Display assembly 300 also includes an audio input interface 340 coupled to processor via the system bus. In the example embodiment, audio input interface 340 includes a microphone 344 to enable the user to communicate with a third party.

Moreover, in the example embodiment, display assembly 300 includes an audio output device 348 that is coupled to processor 310 via the system bus. In the example embodiment, audio output device 348 is an audio adapter and/or a speaker. Alternatively, audio output device 348 may be any type of device that enables display assembly 300 and/or monitoring system 100 to function as described herein. In the example embodiment, audio output device 348 is configured to receive an output from processor 310 when the dosage level exceeds the predefined threshold level. Audio output device 348 is configured to generate an audio signal based on the output received. More specifically, audio output device 348 is configured to generate an audio signal based on the dosage level for the radiation exceeding a predefined threshold level. Audio output device 348 is configured to transmit the audio signal to the user. In the example embodiment, the audio signal is an audio alarm that may annunciate an actual radiation dosage level, dose rate, and/or warning. Alternatively, audio signal may be any type of audio signal that enables display assembly 300 and/or monitoring system 100 to function as described herein.

During operation, in the example embodiment, as the user wearing display assembly 300 approaches piping system 102 (shown in Fig. 1), if radiation is emitted from piping system 102, such radiation will be detected within distance 108 (shown in Fig. 1). Each sensor 112 (shown in Fig. 1) detects the presence of radiation by detecting the type of radiation and by detecting a dosage level for the radiation. This radiation data is transmitted to communication interface 116.

Moreover, in the example embodiment, the radiation data is transmitted to display assembly 300. More specifically, the radiation data is received by communication interface 302. Communication interface 302 transmits the radiation data to receiver 306, which transmits the data to processor 310 and to memory device 314 to be stored. Processor 310 continuously generates a plurality of images based on the radiation data communication interface 302 continues to receive. More specifically, processor 310 generates an image that includes a graphical representation of a dosage level and/or a dose rate for the radiation detected and the time remaining until a predefined threshold value is reached. If the dosage level and/or dose rate exceeds the predefined threshold value that is programmed in processor 310, then processor 310 generates an image that includes a textual warning.

Display media 318 continuously presents information to the user based on the input the user provides to user interface 330. More specifically, the user can input whether the information is presented via a visual output and/or audio output. If the user chooses to receive the information via a visual output, processor 310 continuously transmits the plurality of images to display media 318. The user can then visually identify various parameters of the radiation within the industrial facility. More specifically, the user will be presented with an image that includes a graphical representation of a dosage level and/or dose rate for the radiation detected and the time remaining until a predefined threshold value for the dosage level and/or dose rate is reached. Moreover, if the dosage level and/or dose rate exceeds a predefined threshold value, then the user will see an image that includes a textual warning. These images will continue to change as each of the parameters change while the user moves about a location within the industrial facility.

If the user chooses to receive additional information via an audio output, processor 310 transmits an audio output to audio output device 348 when the dosage level and/or dose rate for the radiation exceeds a predefined threshold value. Audio output device 348 generates an audio signal based on the output received. More specifically, audio output device 348 generates an audio signal based on the dosage level and/or dose rate for the radiation exceeding the predefined threshold value. Audio output device 348 then transmits the audio signal to the user.

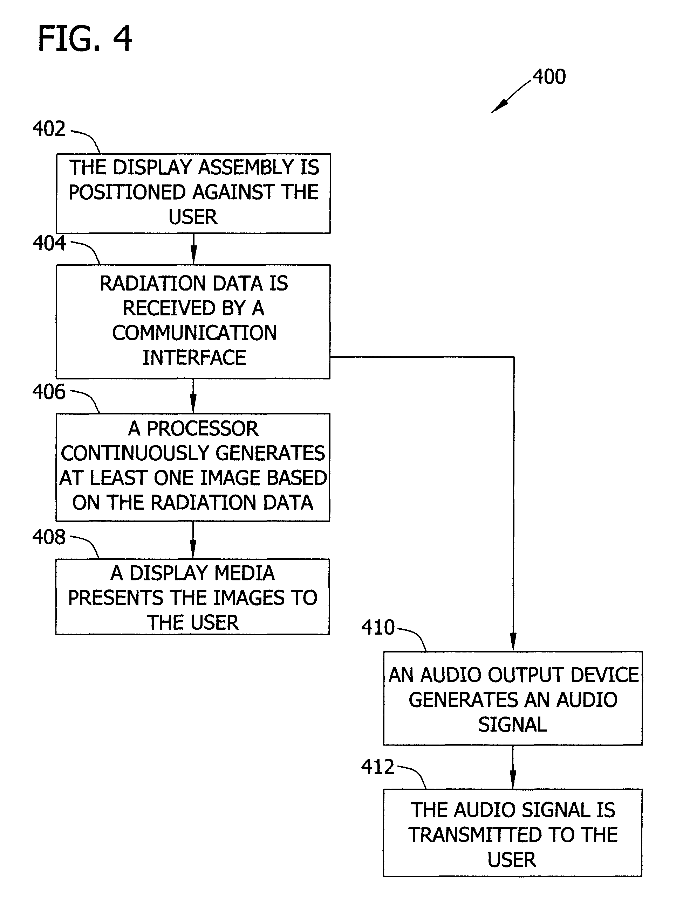

Fig. 4 is a flow chart that illustrates an example method 400 for use in monitoring radiation using a display assembly, such as display assembly 118 (shown in Figs. 1 and 2). Alternatively, method 400 may use display assembly 300 (shown in Fig 3). In the example embodiment, display assembly 118 is positioned 402 against a user (not shown), such as against the body (not shown) of the user. More specifically, display assembly 118 is positioned against the user such that the display assembly is movable with the user and the user is enabled to continuously. Radiation data is received 404 by a communication interface 202 (shown in Fig. 2), wherein the radiation data is indicative of a dosage level and/or a dose rate for the radiation detected. A processor 210 (shown in Fig. 2) continuously generates 406 at least one image based on the radiation data. More specifically, in the example embodiment, the images include a graphical representation of the dosage level for the radiation detected and the remaining time until a predefined threshold value for the dosage level and/or dose rate is reached. Moreover, if the dosage level and/or dose rate exceeds the predefined threshold value that is programmed in processor 210, then an image that includes a textual warning is also generated. These images will continue to change as each of the parameters change while the user moves about the location.

A display media 218 (shown in Fig. 2) presents 408 the images to the user. Moreover, in the example embodiment, an audio output device 248 (shown in Fig. 2) generates 410 an audio signal based on a dosage level for the radiation exceeding a predefined threshold value. The audio signal is transmitted 412 to the user.

As compared to known systems and methods that are used to monitor radiation, the above-described embodiments of methods and systems provide a user friendly system to monitor radiation that enables the user to react more quickly to a developing danger relating to radiation within an industrial facility. In particular, the embodiments described herein provide a monitoring system that includes a display assembly. The display assembly includes a communication interface that is configured to receive radiation data indicative of at least one of a dosage level for the radiation and a dose rate for the radiation. Moreover, the display assembly also includes a processor that is coupled to the communication interface, wherein the processor is programmed to generate at least one image based on the radiation data. The display assembly also includes a display media coupled to the processor, wherein the display media is configured to present the image to a user in real-time. The display assembly is positioned against the user such that the display assembly is movable with the user and the user is enabled to continuously monitor the radiation within a location while the user moves about the location. As such, the monitoring system disclosed herein enables the user to monitor the radiation in a hands free mode and/or enables the user to have a direct display via a handheld sensor that is lightweight and convenient to carry around the facility.

Technical features of the systems and methods described herein includes at least one of: (a) positioning a display assembly against a user such that the display assembly is movable with the user and the user is enabled to continuously monitor the radiation within a location while the user moves about the location; (b) receiving radiation data indicative of at least one of a dosage level for the radiation and a dose rate for the radiation; (c) generating at least one image based on radiation data; and presenting in real-time, via a display media, at least one image to a user.

Example embodiments of a system and a method for use in monitoring radiation are described above in detail. The system and method are not limited to the specific embodiments described herein, but rather, components of the system and/or steps of the method may be utilized independently and separately from other components and/or steps described herein. For example, the system may also be used in combination with other systems and methods, and is not limited to practice with only the system as described herein. Rather, the example embodiment can be implemented and utilized in connection with many other applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A display assembly (118) for use with a monitoring system (100), said display assembly comprising:
a communication interface (202) configured to receive radiation data indicative of at least a dosage level for the radiation;
a processor (210) coupled to said communication interface, wherein said processor is programmed to generate at least one image representative of the radiation data; and
a display media (218) coupled to said processor, wherein said display media is configured to present the at least one image to a user in real-time, said display assembly is positioned against the user such that the display assembly is movable with the user and the user is enabled to continuously monitor the radiation within a location (108) while the user moves about the location.

2. A display assembly (118) in accordance with Claim 1, wherein said display media (218) comprises at least one lens (224), and/or said display media (218) comprises at least one display screen (324).

3. A display assembly (118) in accordance with Claim 1 or Claim 2, wherein the at least one image includes a graphical representation of at least one of the dosage level for the radiation, a dose rate for the radiation, and the time remaining until a predefined threshold value is reached.

4. A display assembly (118) in accordance with Claim 1, 2 or 3, wherein the at least one image provides a textual warning if at least one of the dosage level for the radiation and a dose rate for the radiation exceeds a predefined threshold value.

5. A display assembly (118) in accordance with Claim 4, wherein the textual warning is provided in time intervals.

6. A display assembly (118) in accordance with any one of Claims 1 to 5, further comprising an audio output device (248) coupled to said processor (210), wherein said audio output device is configured to generate an audio signal based on at least one of the dosage level for the radiation and a dose rate for the radiation exceeding a predefined threshold value, said audio output device is configured to transmit the audio signal to the user.

7. A monitoring system (100) comprising:
a sensor assembly (106) comprising at least one sensor (112) configured to detect radiation and to generate at least one signal representative of radiation data based on the detection of radiation, wherein the radiation data is indicative of at least a dosage level for the radiation;
a display assembly (118) communicatively coupled to said sensor assembly, said display assembly comprising:
a communication interface (202) configured to receive the radiation data;
a processor (210) coupled to said communication interface, wherein said processor is programmed to generate at least one image representative of the radiation data; and
a display media (218) coupled to said processor, wherein said display media is configured to present the at least one image to a user in real-time, said display assembly is positioned against the user such that the display assembly is movable with the user and the user is enabled to continuously monitor the radiation within a location (108) while the user moves about the location.

8. A monitoring system (100) in accordance with Claim 7, wherein said sensor assembly (106) is positioned against the user such that the sensor assembly is movable with the user.

9. A monitoring system (100) in accordance with Claim 7 or Claim 8, wherein said display media (218) comprises at least one of a lens (224) and a display screen (223).

10. A monitoring system (100) in accordance with Claim 7, 8 or 9, wherein the at least one image includes a graphical representation of at least one of the dosage level for the radiation, a dose rate for the radiation, and the time remaining until a predefined threshold value is reached.

11. A monitoring system (100) in accordance with any one of Claims 7 to 10, wherein the at least one image provides a textual warning if at least one of the dosage level for the radiation and a dose rate for the radiation exceeds a predefined threshold value, wherein the textual warning is provided in time intervals.

12. A monitoring system in accordance with any one of Claims 7 to 11, wherein said display assembly (118) further comprises an audio output device coupled to said processor, said audio output device is configured to generate an audio signal based on at least one of the dosage level for the radiation and a dose rate for the radiation exceeding a predefined threshold level, wherein said audio output device is configured to transmit the audio signal to the user.

13. A method for use in monitoring radiation, said method comprising:
positioning a display assembly (118) against a user such that the display assembly is movable with the user and the user is enabled to continuously monitor the radiation within a location while the user moves about the location;
receiving radiation data indicative of at least a dosage level for the radiation;
generating at least one image representative of the radiation data; and
presenting in real-time, via a display media (218), the at least one image to the user.

14. A method in accordance with Claim 13, wherein presenting in real-time further comprises one of:
presenting in real-time, via at least one screen within at least one lens, the at least one image to the user;
presenting in real-time, via at least one screen, the at least one image to the user;
presenting in real-time, via a display media, a graphical representation of at least one of the dosage level for the radiation and a dose rate for the radiation;
presenting in real-time, via a display media, the time remaining until a predefined threshold value is reached; and
presenting in real-time, via a display media, a textual warning if at least one of the dosage level for the radiation and a dose rate for the radiation exceeds a predefined threshold value, wherein the textual warning is presented in time intervals.

15. A method in accordance with Claim 13 or Claim 14, further comprising:
generating, via an audio output device (248), an audio signal based on at least one of the dosage level for the radiation and a dose rate for the radiation exceeding a predefined threshold level; and
transmitting the audio signal to the user.
